# EUROPEAN PATENT SPECIFICATION

(11) **EP 2 712 344 B1**
(45) Date of publication and mention of the grant of the patent: **22.04.2015**
(21) Application number: 11748762.9
(22) Date of filing: 01.07.2011
(51) Int. Cl.: B60R 19/48

(54) **IMPACT ENERGY CONVERSION DEVICE**
STOSSENERGIEUMWANDLUNGSGERÄT
DISPOSITIF DE CONVERSION D'ÉNERGIE D'IMPACT

(30) Priority: 04.04.2011 PL 39444411
(43) Date of publication of application: 02.04.2014
(73) Proprietor: Radowski, Piotr Mitre, 81-526 Gdynia (PL)
(72) Inventor: Radowski, Piotr Mitre, 81-526 Gdynia (PL)
(74) Representative: Pomianek, Grazyna
(86) International application number: PCT/PL2011/000068
(87) International publication number: WO 2012/138237

(56) References cited:
- US-A- 3 801 147
- US-A- 5 285 877

## Description

The invention concerns a device to convert the impact energy of a car bumping into an obstruction or another vehicle, designed particularly for a car bumper. The device may also be used to convert the impact energy of sudden vehicle braking, or to assist the crankshaft drive in a car engine, or to assist the compression in a compressor.

Known from patent specification US 5,593,195 is an impact moderating mechanism for automobiles comprising a pair of identical, bump absorbing and transferring devices respectively equipped at two ends of a chassis. Each of the devices comprises an outer bumper and two pairs of hydraulic cylinders mutually connected with numerous conduits. The devices mounted on one end of the vehicle can absorb some of the energy released from crash and then transfer much of the energy to the devices on the opposite end of the vehicle, where it is eliminated. DE 3506001 A1 discloses a hydraulic/pneumatic bumper dampening device.

Known from patent specification PL 196362 B1 is a safe car bumper comprising a set of springs and a hydraulic system of piston-fitted cylinders, combined with safety valves and a latch device, thanks to which the bumper spring set absorbs the energy and at the same time blocks the instant rebound of the absorbed energy.

Also, known from the description contained in patent application P.358597 is a hydraulic rebound bumper with a working cylinder filled with working fluid and a sliding piston fitted therein, where a rebound stroke valve is connected to the piston rod, which slides through the shock absorber along piston rod guides. There is a pad inside the cylinder, with at least one surface co-operating with the inlet side of the conduits of the piston rebound stroke valve, the pad fixed to the spring element on one end, and mounted at the piston rod guide on the other end.'

The known solutions fail to mitigate the bump effects sufficiently, if the crashing vehicle travels at high speeds.

The present invention solves the problem of immediate absorption of the energy released at the time an object, particularly a speeding car, hits an obstruction or brakes suddenly, and in effect reduces the impact of the inertial force to a substantial extent.

The problem has been solved by designing a mechanism where the energy released at the time when a fast moving object hits an obstruction or brakes suddenly is absorbed by a working agent, then transferred to an absorber, which accumulates the energy and finally disperses it.

The invention further offers a solution to the issue of economic fuel consumption in car engines, and addresses environment protection by reducing fume emission. The problem was solved by utilising the energy released in effect of cyclical rapid thrusts caused by pressure changes between individual engine cylinders to assist the engine crankshaft drive.

Also the invention further offers a solution to the aid the compression in a compressor. The problem was solved by utilising the energy released in effect of cyclical rapid thrusts caused by pressure changes between individual compressor cylinders to assist the compression in a compressor.

An impact energy conversion device according to this invention is characterised in that it has cylinders and at least one confusor, where each confusor is, at its inlet, connected to a hydraulic cylinder fitted inside with the bearing of the main piston rod, which receives the impuls of the impact, and at its outlet is, via a non-return valve, connected to a hydropneumatic cylinder, its hydraulic section separated from the pneumatic section with a separator, which cooperates with the agent flowing through the confusor.

Preferably, the separating function is performed by the piston rod, its bearing fitted inside the hydropneumatic cylinder between the hydraulic and pneumatic sections thereof.

Preferably, the main and/or the separator piston rods are jug-shaped.

In another variant of the solution, a mobile piston is additionally fitted in the main piston rod, preferably mounted on a spring element such as a mechanical or gas spring.

In variant one of the invention the confusor and the main hydraulic cylinder are arranged coaxially.

In another variant of the invention the confusor axis runs at angle 0°< α < 180°, preferably the right angle, to the axis of the main hydraulic cylinder.

In the event two or more confusors are used, they are, at the inlet, connected to the main hydraulic cylinder, preferably via a duct. Preferably, the device has two coaxially arranged confusors.

In embodiment one of the invention, the confusor and the hydropneumatic cylinder are arranged coaxially.

In another embodiment of the invention, the confusor axis runs at angle 0°< β < 180°, preferably the right angle, to the axis of the hydropneumatic cylinder.

In the event the confusor is arranged at angle α to the axis of the main hydraulic cylinder, the main piston rod is equipped with auxiliary guiding piston rod.

Preferably, the confusor walls converge at 8° to 16°, and/or the ratio between the confusor cross-section area at the inlet and its cross-section area at the outlet ranges from 1:5 to 1:12, preferably 1:10. Preferably too, the main piston rod and/or the piston rod serving as the separator inside the hydropneumatic cylinder, are sealed at their bearings with a resilient metal gasket in the form of a cylindrical ring, L-shaped in cross-section, its inner edge finished with a sealing lip, which regulates the clearance between the sealed surfaces when under pressure from the direction opposite to the sealing lip.

Preferably, the piston mounted in the main piston rod and/or the piston serving as the separator in the hydropneumatic cylinder, are sealed inside the cylinder with a resilient metal gasket in the form of a cylindrical ring, L-shaped in cross-section, its inner edge finished with a sealing lip, which regulates the clearance between the sealed surfaces when under pressure from the direction of the sealing lip.

The device described above is applied as a car bumper mechanism, wherein the main piston rod receives the impact of bumping into an obstruction or another vehicle, and the converted energy of the impact is accumulated in the pneumatic section of the cylinder, and then dispersed. Also, the device may be applied as a car brake mechanism, wherein the main piston rod receives the impact from the car wheel released during sudden braking, and the converted energy of the impact is accumulated in the pneumatic section of the cylinder, and then dispersed. Also, the device may be applied as a mechanism to assist the crankshaft drive in a car engine, wherein the main piston rod receives cyclical thrusts caused by pressure changes between individual engine cylinders, and the converted energy of the thrusts is cyclically transmitted to the proper engine cylinder, or as a mechanism to assist the compression in a compressor, wherein the main piston rod receives cyclical thrusts caused by pressure changes between individual compressor cylinders, and the converted energy of the thrusts is cyclically transmitted to the proper compressor cylinder.

The device is then built into the engine or compressor cylinder system.

Thanks to the immediate accumulation of the impact of a bump or sudden braking the device according to the invention, when used in a car bumper, ensures that the impact of the inertial force on car passengers, the car itself, and the objects inside it is minimised.

Exemplary embodiments of the invention are illustrated on the drawing, where:
Fig. 1 presents an axial cross-section of the device in the embodiment variant with one confusor arranged coaxially to the main cylinder and the hydropneumatic cylinder shown in its initial position before the bump,
Fig. 2 shows an axial cross-section of the device as illustrated on Fig. 1, in its ultimate position after the bump,
Fig. 3 presents an axial cross-section of the device in the embodiment variant with two confusors arranged coaxially to each other, but at the right angle to the main cylinder and the hydropneumatic cylinder cooperating with the specific confusor,
Fig. 4 presents an aerial view of the device, as illustrated on Fig. 3,
Fig. 5 shows a cross-section of the gasket sealing the piston rods according to the variant illustrated on Fig. 4,
Fig. 6 presents an axial cross-section of the device in its initial position, in the embodiment variant with one confusor arranged coaxially to the main cylinder and the hydropneumatic cylinder. The main piston rod is fitted inside with a mobile piston set on a spring, and the piston inside the hydropneumatic cylinder serves as the separator.
Fig. 7 shows a cross-section of the gasket sealing the pistons in the cylinders according to the variant illustrated on Fig. 6.

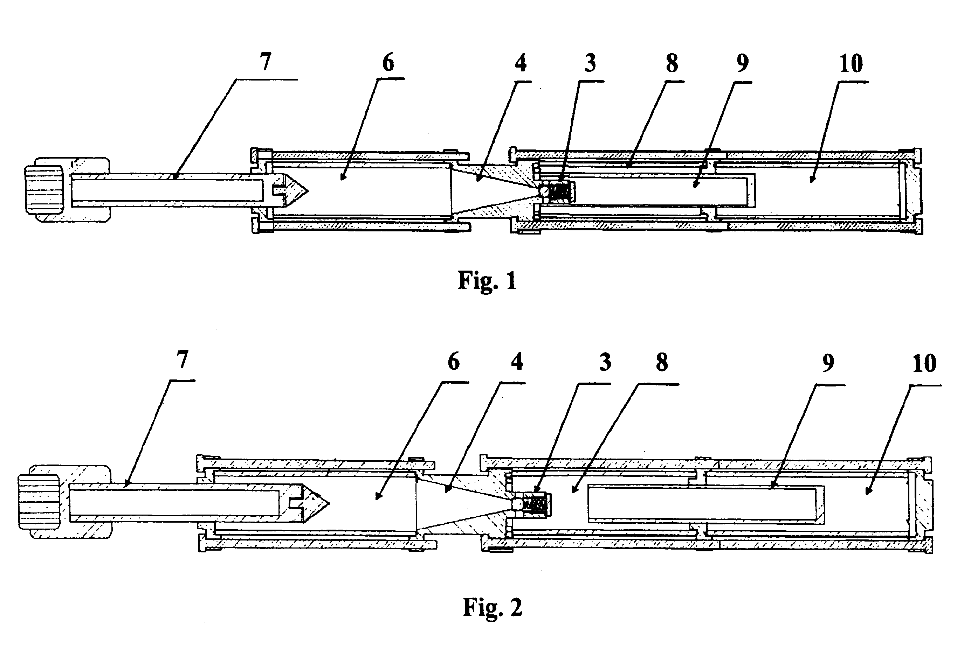

According to the exemplary embodiment of the invention shown on Fig. 1 and Fig. 2, the device used as the bumper or brake mechanism has one confusor 4 connected at the inlet to the main hydraulic cylinder 6, which is fitted inside with the bearing of the main piston rod 7, where the piston rod, hollow so as to reduce its weight, receives the impulse of the bump or rapid braking, and the same confusor 4 is at the outlet connected via a non-return valve 3 to the hydropneumatic cylinder 8, 10, its hydraulic section 8 and pneumatic section 10 separated with the bearing-set piston rod 9, jug-shaped to reduce its weight and co-operating with the agent flowing through the confusor 4. The main hydraulic cylinder 6, confusor 4, and the hydropneumatic cylinder 8,10 are all arranged coaxially.

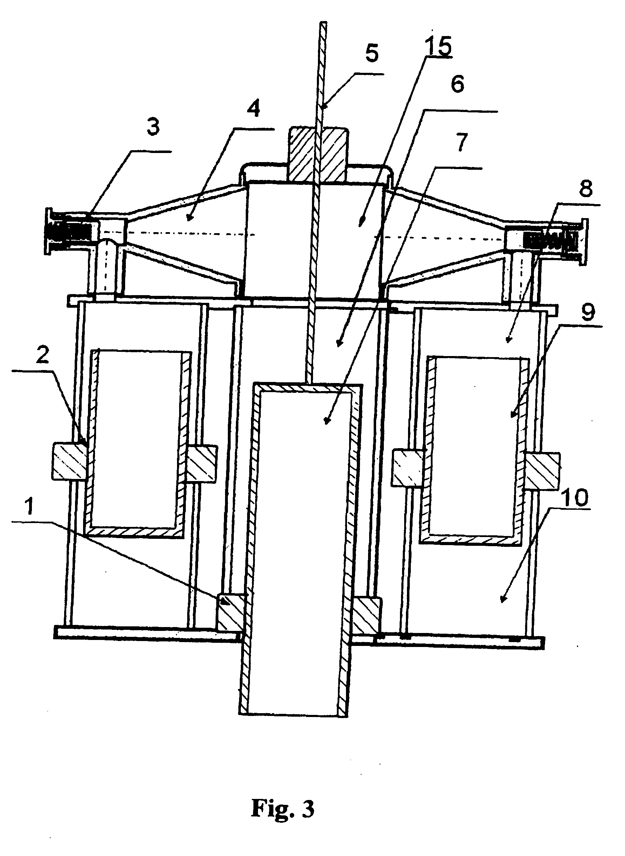

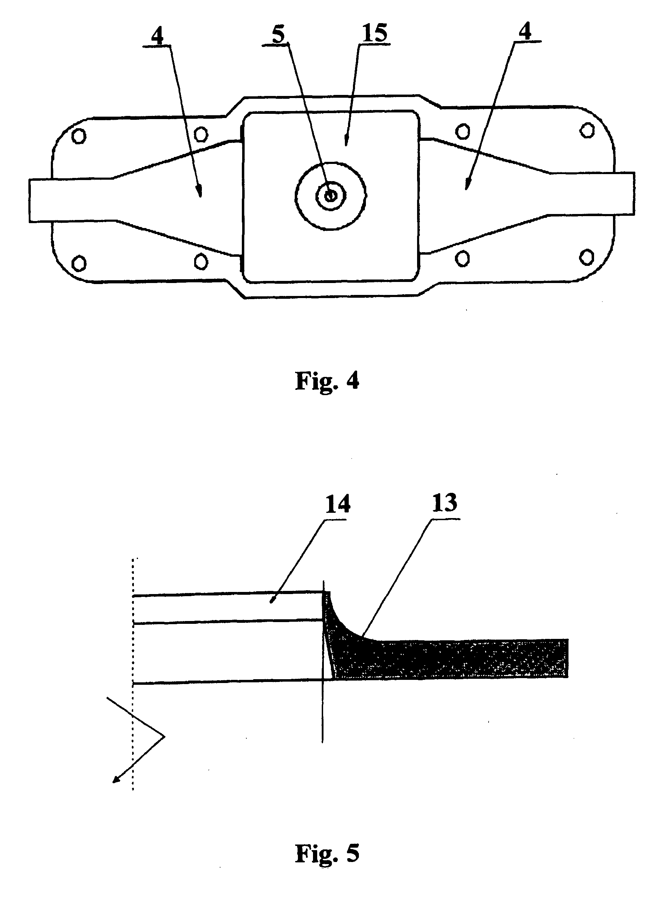

According to the exemplary embodiment of the invention shown on Fig. 3 and Fig. 4, the device used as the bumper or brake mechanism has two coaxially arranged confusors 4, each connected at the inlet to the main hydraulic cylinder 6 via a duct 15, and each connected at the outlet to a hydropneumatic cylinder 8, 10 via a non-return valve 3. The axes of the confusors 4 run at the right angle to the axis of the main cylinder 6 and to the axes of the hydropneumatic cylinders 8, 10. The main cylinder 6 is fitted with a bearing-set main piston rod 7, hollow so as to reduce its weight, which receives the impulse of the bump or rapid braking, and the hydropneumatic cylinder 8, 10 is fitted with a bearing-set piston rod 9 separating its hydraulic section 8 and pneumatic section 10, jug-shaped to reduce its weight and co-operating with the agent flowing through the confusor 4. The main piston rod 7 is equipped with auxiliary guiding piston rod 5 so as to ensure its axial movement.

Preferably, the bearings of the piston rods 7, 9 inside the respective cylinders 6, 8, and 10 are linear, and are preferably sealed therein with a resilient metal gasket in the form of a cylindrical ring 13, L-shaped in cross-section, its inner edge finished with a sealing lip 14, as presented on Fig. 5. In order to regulate the clearing between the sealed surfaces, the ring 13 is subject to pressure from the direction opposite to the sealing lip 14. Preferably, the confusor walls converge at 8° to 16°, and/or the ratio between the confusor cross-section area at the inlet and its cross-section area at the outlet ranges from 1:5 to 1:12, preferably 1:10.

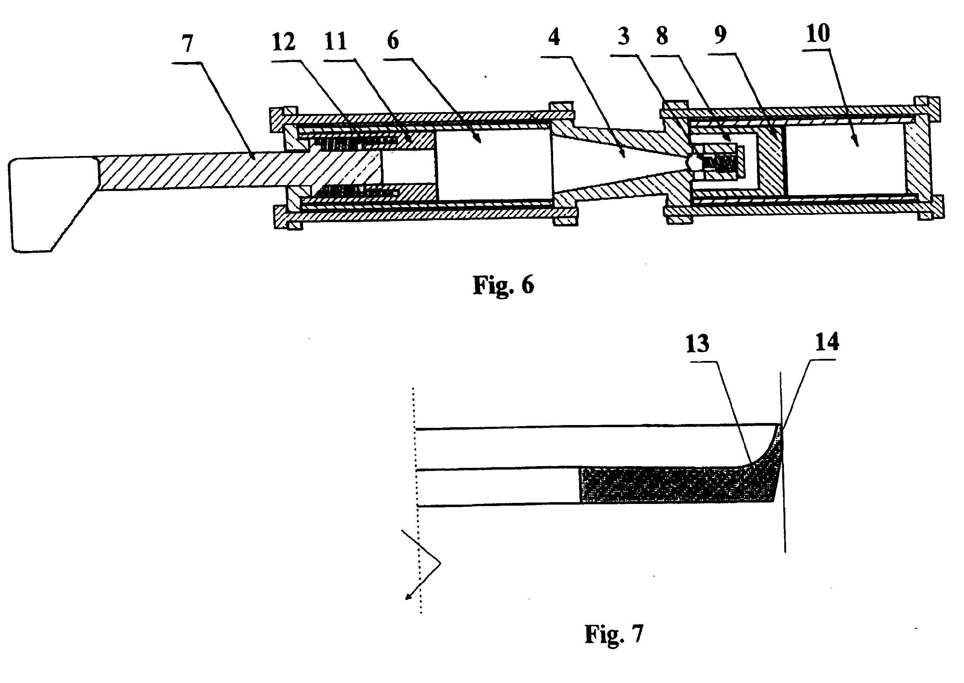

According to the exemplary embodiment of the invention shown on Fig. 6, the device used as the bumper or brake mechanism has one confusor 4 connected at the inlet to the main hydraulic cylinder 6 fitted inside with the bearing of the main piston rod 7, which receives the impulse of the bump or rapid braking, and the same confusor 4 is at the outlet connected via a non-return valve 3 to the hydropneumatic cylinder 8, 10. The main piston rod 7 is fitted inside with a mobile piston 11 set on a spring 12. The piston 9 inside the hydropneumatic cylinder 8, 10 serves as the separator, and the agent flowing through the confusor 4 serves as the piston rod. The main hydraulic cylinder 6, the confusor 4, and the hydropneumatic cylinder 8,10 are all arranged coaxially.

Preferably, each of: piston 11 and piston 9, the latter serving as the separator in the hydropneumatic cylinder, is sealed in its respective cylinder 6, and 8,10 with a resilient metal gasket in the form of a cylindrical ring 13, L-shaped in cross-section, its outer edge finished with a sealing lip 14, as shown on Fig. 7. In order to regulate the clearance between the sealed surfaces, the ring 13 is subject to pressure from the direction of the sealing lip 14. Preferably, the confusor walls converge at 8° to 16°, and/or the ratio between the confusor cross-section area at the inlet and its cross-section area at the outlet ranges from 1:5 to 1:12, preferably 1:10.

In each embodiment of the invention according to the patent claims, the main piston rod 7 receives the impulse of the bump and transfers it to the hydraulic agent causing its sudden shift towards the confusor(s) 4. The hydraulic agent under the high pressure opens the non-return valve 3 in the confusor 4, and the agent flows into the hydraulic section 8 of the hydropneumatic cylinder shifting the piston rod 9 into the pneumatic section 10 of the same cylinder, or - in another version of the invention - shifting the piston 9 and thus causing accumulation of the bump-released energy in the pneumatic section 10 of the cylinder, whereupon the energy is either dispersed (in the event the device is used as a bumper or brake mechanism), or transmitted to the appropriate engine cylinder (if the device is used as a mechanism to assist the crankshaft drive), or transmitted to the appropriate compressor cylinder (if the device is used as a mechanism to assist the compression).

Experiments have proven that a resilient metal gasket in the form of a cylindrical ring 13, L-shaped in cross-section, its outer or inner edge finished with a sealing lip 14, when subject to pressure as appropriate to regulate the clearance between the sealed surfaces, ensures proper tightening of the system subject to very high pressures and reduces friction.

## Claims

1. An impact energy conversion device, **characterised in that** it has cylinders and at least one confusor, where each confusor (4) is, at its inlet, connected to the main hydraulic cylinder (6) fitted inside with the bearing of the main piston rod (7), which receives the impulse from an impact, and at its outlet is, via a non-return valve (3), connected to a hydropneumatic cylinder (8,10), its hydraulic section (8) separated from the pneumatic section (10) with a separator, which cooperates with the agent flowing through the confusor (4).

2. The device as claimed in Claim 1, **characterised in that** the separator serves as the piston (9) inside the hydropneumatic cylinder (8,10) between the hydraulic section (8) and the pneumatic section (10).

3. The device as claimed in Claim 1 or 2, **characterised in that** the main piston rod (7) and/or the separator piston rod (9) are jug-shaped.

4. The device as claimed in Claim 1, **characterised in that** the separator serves as the piston (9) inside the hydropneumatic cylinder.

5. The device as claimed in Claims 1 to 4, **characterised in that** the main piston rod (7) is fitted inside with a mobile piston (11).

6. The device as claimed in Claim 5, **characterised in that** the piston (11) is mounted in the main piston rod (7) on a spring element (12), preferably a mechanical or gas spring.

7. The device as claimed in Claims 1 to 6, **characterised in that** the confusor (4) and the main hydraulic cylinder (6) are arranged coaxially.

8. The device as claimed in Claims 1 to 6, **characterised in that** the axis of the confusor (4) runs at angle 0°< α < 180°, preferably the right angle, to the axis of the main hydraulic cylinder (6).

9. The device as claimed in Claim 8, **characterised in that** the confusors (4) are each connected at the inlet to the main hydraulic cylinder (6) via a duct (15).

10. The device as claimed in Claim 9, **characterised in that** it has two confusors (4) arranged coaxially.

11. The device as claimed in Claims 1 to 10, **characterised in that** the confusor (4) and the hydropneumatic cylinder (8, 10) are arranged coaxially.

12. The device as claimed in Claims 1 to 10, **characterised in that** the confusor (4) axis runs at angle 0°< β < 180°, preferably the right angle, to the axis of the hydropneumatic cylinder.

13. The device as claimed in Claims 8 to 12, **characterised in that** the main piston rod (7) is equipped with auxiliary guiding piston rod (5).

14. The device as claimed in Claims 1-13, **characterised in that** the confusor (4) walls converge at 8° to 16 °.

15. The device as claimed in Claims 1 to 14, **characterised in that** the ratio between the confusor (4) cross-section area at the inlet and its cross-section area at the outlet ranges from 1:5 to 1:12, preferably 1:10

16. The device as claimed in Claims 1 or 2, **characterised in that** the main piston rod (7) and/or the piston rod (9) serving as the separator are sealed in their bearings (1, 2) with a resilient metal gasket in the form of a cylindrical ring (13), L-shaped in cross-section, its inner edge finished with a sealing lip (14), which regulates the clearance between the sealed surfaces when under pressure from the direction opposite of the sealing lip (14).

17. The device as claimed in Claims 4 to 6, **characterised in that** the piston (11) and/or the piston (9) serving as the separator are sealed in their cylinders with a resilient metal gasket in the form of a cylindrical ring (13), L-shaped in cross-section, its inner edge finished with a sealing lip (14), which regulates the clearance between the sealed surfaces when under pressure from the direction of the sealing lip (14).

18. The device as claimed in Claims 1 to 17, **characterised in that** it is applied as a car bumper mechanism, wherein the main piston rod (7) receives the impact of bumping into an obstruction or another vehicle, and the converted energy of the impact is accumulated in the pneumatic section (10) of the cylinder, and then dispersed.

19. The device as claimed in Claims 1 to 17, **characterised in that** it is applied as a car brake mechanism, wherein the main piston rod (7) receives the impact from the car wheel released during sudden braking, and the converted energy of the impact is accumulated in the pneumatic section (10) of the cylinder, and then dispersed.

20. The device as claimed in Claims 1 to 17, **characterised in that** it is applied as a mechanism to assist the crankshaft drive in a car engine, wherein the main piston rod (7) receives cyclical thrusts caused by pressure changes between individual engine cylinders, and the converted energy of the thrusts is cyclically transmitted to the proper engine cylinder.

21. The device as claimed in Claims 1 to 17, **characterised in that** it is applied as a mechanism to assist the compression in a compressor, wherein the main piston rod (7) receives cyclical thrusts caused by pressure changes between individual compressor cylinders, and the converted energy of the thrusts is cyclically transmitted to the proper compressor cylinder.

## Patentansprüche

1. Vorrichtung für die Konversion einer Stoßenergie, **dadurch gekennzeichnet, dass** sie mehrere Zylinder sowie mindestens einen Konfusor enthält, wobei jeder Konfusor (4) mit dem hydraulischen Hauptzylinder (6) am Eintritt verbunden ist, in dem die einen Stoßimpuls abfangende Hauptkolbenstange (7) gelagert ist, und am Austritt über ein Rückschlagventil (3) mit einem hydraulisch-pneumatischen Zylinder (8, 10) verbunden ist, bei dem dessen hydraulischer Teil (8) vom dessen pneumatischen Teil (10) durch einen Separator abgetrennt ist, welche mit dem durch den Konfusor (4) fließenden Medium zusammenwirkt.

2. Vorrichtung gemäß Anspruch 1, **dadurch gekennzeichnet, dass** den Separator die im hydraulisch-pneumatischen Zylinder (8, 10) zwischen dessen hydraulischem (8) und pneumatischem Teil (10) gelagerte Kolbenstange (9) bildet.

3. Vorrichtung gemäß Anspruch 1 oder 2, **dadurch gekennzeichnet, dass** die Hauptkolbenstange (7) und/oder die Kolbenstange (9) des Separators die Form eines Bechers aufweist.

4. Vorrichtung gemäß Anspruch 1, **dadurch gekennzeichnet, dass** den Separator ein im hydraulisch-pneumatischen Zylinder gelagerter Kolben (9) bildet.

5. Vorrichtung gemäß den Ansprüchen 1 bis 4, **dadurch gekennzeichnet, dass** in der Hauptkolbenstange (7) der Kolben (11) beweglich gelagert ist.

6. Vorrichtung gemäß Anspruch 5, **dadurch gekennzeichnet, dass** der Kolben (11) mittels eines federnden Mittels (12), bevorzugt einer mechanischen oder Gasfeder, in der Hauptkolbenstange (7) gelagert ist.

7. Vorrichtung gemäß den Ansprüchen 1 bis 6, **dadurch gekennzeichnet, dass** der Konfusor (4) und der hydraulische Hauptzylinder (6) koaxial zueinander positioniert sind.

8. Vorrichtung gemäß den Ansprüchen 1 bis 6, **dadurch gekennzeichnet, dass** die Achse des Konfusors (4) in einem Winkel von 0°< α < 180°, bevorzugt im rechten Winkel, zur Achse des hydraulischen Hauptzylinder (6) positioniert ist.

9. Vorrichtung gemäß Anspruch 8, **dadurch gekennzeichnet, dass** die Konfusoren (4) über einen Kanal (15) mit dem hydraulischen Hauptzylinder (6) am Eintritt verbunden sind.

10. Vorrichtung gemäß Anspruch 9, **dadurch gekennzeichnet, dass** sie zwei koaxial zueinander portioniert Konfusoren (4) enthält.

11. Vorrichtung gemäß den Ansprüchen 1 bis 10, **dadurch gekennzeichnet, dass** der Konfusor (4) sowie der hydraulisch-pneumatische Zylinder (8, 10) koaxial zueinander positioniert sind.

12. Vorrichtung gemäß den Ansprüchen 1 bis 10, **dadurch gekennzeichnet, dass** die Achse des Konfusors (4) in einem Winkel von 0°< β < 180°, bevorzugt im rechten Winkel, zur Achse des hydraulisch-pneumatischen Zylinders (8, 10) positioniert ist.

13. Vorrichtung gemäß den Ansprüchen 8 bis 12, **dadurch gekennzeichnet, dass** die Hauptkolbenstange (7) mit einer Hilfs-rührungskolbenstange (5) ausgestattet ist.

14. Vorrichtung gemäß den Ansprüchen 1 bis 13, **dadurch gekennzeichnet, dass** die Konvergenz der Wände des Konfusors (4) 8° bis 16° beträgt.

15. Vorrichtung gemäß den Ansprüchen 1 bis 14, **dadurch gekennzeichnet, dass** das Verhältnis des Flächeninhalts vom Querschnitt des Konfusors (4) am Eintritt zum Flächeninhalt vom Querschnitt am dessen Austritt 1: 5 bis 1:12, bevorzugt 1:10 beträgt.

16. Vorrichtung gemäß den Ansprüchen 1 oder 2, **dadurch gekennzeichnet, dass** die Hauptkolbenstange (7) und/oder die Kolbenstange (9), welche die Rolle eines Separators erfüllen, mithilfe einer elastischen Metalldichtung in Form eines zylindrischen Rings (13) mit einem "L"-förmigen Querschnitt in den Lagern (1, 2) verdichtet sind, welcher an seinem inneren Rand mit einer Dichtlippe (14) abgeschlossen ist, auf den von der Gegenseite bezüglich der Dichtlippe (14) Druck ausgeübt wird, welcher die Spaltgröße zwischen den zu verdichtenden Flächen einstellt.

17. Vorrichtung gemäß den Ansprüchen 4 bis 6, **dadurch gekennzeichnet, dass** der Kolben (11) und/oder der Kolben (9), der die Funktion eines Separators erfüllt, mithilfe einer elastischen Metalldichtung in Form eines zylindrischen Rings (13) mit einem "L"-formigen Querschnitt im Zylinder verdichtet sind, welcher an seinem äußeren Rand mit einer Dichtlippe (14) abgeschlossen ist, auf den von der Seite der Dichtlippe (14) Druck ausgeübt wird, welcher die Spaltgröße zwischen den zu verdichtenden Flächen einstellt.

18. Vorrichtung gemäß den Ansprüchen 1 bis 17, **dadurch gekennzeichnet, dass** sie als ein Mechanismus einer Kfz-Stoßstange Anwendung findet, wobei die Hauptkolbenstange (7) den Impuls eines Stoßes gegen ein Hindernis oder eines Zusammenstoßes mit einem anderen Fahrzeug aufnimmt und die umgewandelte Stoßenergie im pneumatischen Teil (10) des Zylinders akkumuliert und anschließend zerstreut wird.

19. Vorrichtung gemäß den Ansprüchen 1 bis 17, **dadurch gekennzeichnet, dass** sie als ein Mechanismus einer Kfz-Bremse Anwendung findet, wobei die Hauptkolbenstange (7) den Impuls eines Stoßes aus dem Fahrzeugrad bei einem plötzlichen Abbremsen aufnimmt und die umgewandelte Stoßenergie im pneumatischen Teil (10) des Zylinders akkumuliert und anschließend zerstreut wird.

20. Vorrichtung gemäß den Ansprüchen 1 bis 17, **dadurch gekennzeichnet, dass** sie als ein Hilfsmechanismus für den Antrieb der Kurbelwelle eines Kfz-Motors Anwendung findet, wobei die Hauptkolbenstange (7) die zyklischen, durch Druckänderungen zwischen den einzelnen Motorzylindern verursachten Stoßimpulse aufnimmt und die umgewandelte Stoßenergie an entsprechenden Motorzylinder zyklisch übergeben wird.

21. Vorrichtung gemäß den Ansprüchen 1 bis 17, **dadurch gekennzeichnet, dass** sie als ein Hilfsmechanismus für das Verdichten im Kompressor Anwendung findet, wobei die Hauptkolbenstange (7) die zyklischen, durch Druckänderungen zwischen den einzelnen Kompressor-Zylindern verursachten Stoßimpulse aufnimmt und die umgewandelte Stoßenergie an entsprechenden Kompressor-Zylinder zyklisch übergeben wird.

## Revendications

1. Dispositif pour la conversion de l'énergie de choc, **caractérisée en ce qu'**il comporte des cylindres et au moins un collecteur convergent, chaque collecteur convergent (4) étant raccordé à l'entrée avec le cylindre hydraulique principal (6), dans lequel est guidée la tige de piston principale (7) recevant l'impulsion de choc, et raccordé à la sortie à travers une soupape de retour (3) avec le cylindre hydraulique-pneumatique (8, 10), dans lequel sa partie hydraulique (8) est séparée de sa partie pneumatique (10) par un séparateur coopérant avec le fluide s'écoulant par le collecteur convergent (4).

2. Dispositif selon la revendication 1, **caractérisé en ce que** le séparateur est une tige de piston (9) guidée dans le cylindre hydraulique-pneumatique (8, 10) entre sa partie hydraulique (8) et pneumatique (10).

3. Dispositif selon la revendication 1 ou 2, **caractérisé en ce que** la tige de piston principale (7) et/ou la tige de piston (9) du séparateur, a une forme de gobelet.

4. Dispositif selon la revendication 1, **caractérisé en ce que** le séparateur est un piston (9) guidé dans le cylindre hydraulique-pneumatique.

5. Dispositif selon la revendication 1 à 4, **caractérisé en ce que** dans la tige de piston principale (7) est encastré de façon mobile le piston (11).

6. Dispositif selon la revendication 5, **caractérisé en ce que** le piston (11) est encastré dans la tige de piston principale (7) par l'intermédiaire d'un moyen élastique (12), de préférence un ressort mécanique ou à gaz.

7. Dispositif selon la revendication 1 à 6, **caractérisé en ce que** le collecteur convergent (4) et le cylindre hydraulique principal (6) sont situés coaxialement l'un par rapport à l'autre.

8. Dispositif selon la revendication 1 à 6, **caractérisé en ce que** l'axe du collecteur convergent (4) est situé à un angle de 0°< α < 180° par rapport à l'axe principal du cylindre hydraulique (6), de préférence à angle droit.

9. Dispositif selon la revendication 8, **caractérisé en ce que** les collecteurs convergents (4) sont raccordés à l'entrée au cylindre hydraulique principal (6) par la conduite (15).

10. Dispositif selon la revendication 9, **caractérisé en ce qu'**il comprend deux collecteurs convergents (4) coaxiaux l'un par rapport à l'autre.

11. Dispositif selon la revendication 1 à 10, **caractérisé en ce que** le collecteur convergent (4) et le cylindre hydraulique-pneumatique (8, 10) sont situés de façon coaxiale l'un par rapport à l'autre.

12. Dispositif selon la revendication 1 à 10, **caractérisé en ce que** l'axe du collecteur convergent (4) est situé à un angle de 0°< β < 180° par rapport à l'axe du cylindre hydraulique-pneumatique (8, 10), de préférence à angle droit.

13. Dispositif selon la revendication 8 à 12, **caractérisé en ce que** la tige de piston principale (7) est équipée d'une tige de piston auxiliaire de guidage (5).

14. Dispositif selon la revendication 1 à 13, **caractérisé en ce que** la convergence des parois du collecteur convergent (4) est de 8° à 16°.

15. Dispositif selon la revendication 1 à 14, **caractérisé en ce que** le rapport de la surface de la section transversale du collecteur convergent (4) à son entrée avec la surface de la section transversale à sa sortie est de 1:5 à 1:12, de préférence 1:10.

16. Dispositif selon la revendication 1 ou 2, **caractérisé en ce que** la tige de piston principale (7) et/ou la tige de piston (9) remplissant le rôle de séparateur, est étanchéifiée dans les paliers (1, 2) à l'aide d'un joint d'étanchéité élastique, métallique, sous forme de bague cylindrique (13) à section transversale en forme de "L", terminée sur son bord interne par une lèvre d'étanchéité (14) sur laquelle est exercée une pression du côté opposé à la lèvre d'étanchéité (14), assurant le réglage de la taille de la fente entre les surface étanchéifiées.

17. Dispositif selon la revendication 4 à 6, **caractérisé en ce que** le piston (11) et/ou le piston (9) remplissant le rôle de séparateur est étanchéité dans le cylindre à l'aide d'un joint d'étanchéité élastique, métallique, sous forme de bague cylindrique (13) à section transversale en forme de "L", terminée sur son bord externe par une lèvre d'étanchéité (14) sur laquelle est exercée une pression du côté opposé de la lèvre d'étanchéité (14), assurant le réglage de la taille de la fente entre les surfaces étanchéifiées.

18. Dispositif selon la revendication 1 à 17, **caractérisé en ce qu'**il est utilisé comme mécanisme de pare-chocs de voiture, la tige de piston principale (7) recevant l'impulsion du choc contre un obstacle ou de la collision avec une autre voiture, et l'énergie convertie du choc est accumulée dans la partie pneumatique (10) du cylindre, et ensuite dissipée.

19. Dispositif selon la revendication 1 à 17, **caractérisé en ce qu'**il est utilisé comme mécanisme de frein de voiture, la tige de piston principale (7) recevant l'impulsion de choc depuis la roue de la voiture, lors d'un freinage rapide, et l'énergie convertie du choc est accumulée dans la partie pneumatique (10) du cylindre, et ensuite dissipée.

20. Dispositif selon la revendication 1 à 17, **caractérisé en ce qu'**il est utilisé comme mécanisme d'assistance à l'entraînement du vilebrequin du moteur de la voiture, la tige de piston principale (7) recevant les impulsions cycliques des chocs déclenchés par les changements de pression entre les différents cylindres du moteur, et l'énergie convertie des impacts est transmise cycliquement au cylindre approprié du moteur.

21. Dispositif selon la revendication 1 à 17, **caractérisé en ce qu'**il est utilisé comme mécanisme d'assistance à la compression dans le compresseur, la tige de piston principale (7) recevant les impulsions cycliques des impacts déclenchés par les changements de pression entre les différents cylindres du compresseur, et l'énergie convertie des impacts est transmise cycliquement au cylindre approprié du compresseur.
